**Europäisches Patentamt**

**European Patent Office**

**Office européen des brevets**

(19)

(11) Veröffentlichungsnummer : **0 372 193 B1**

(12) **EUROPÄISCHE PATENTSCHRIFT**

(45) Veröffentlichungstag der Patentschrift :
18.03.92 Patentblatt 92/12

(51) Int. Cl.⁵ : **G01D 5/26**

(21) Anmeldenummer : 89118657.9

(22) Anmeldetag : 07.10.89

(54) **Gekapselte Positionsmesseinrichtung.**

(30) Priorität : 03.12.88 DE 3840791

(43) Veröffentlichungstag der Anmeldung :
13.06.90 Patentblatt 90/24

(45) Bekanntmachung des Hinweises auf die
Patenterteilung :
18.03.92 Patentblatt 92/12

(84) Benannte Vertragsstaaten :
AT DE FR GB IT

(56) Entgegenhaltungen :
FR-A- 1 601 631

(56) Entgegenhaltungen :
PATENT ABSTRACTS OF JAPAN, Band 11, Nr.
91 (P-558)[2538], 23. März 1987; & JP-A-61 243
309 (NIPPON KOGAKU K.K.) 29-10-1986
PATENT ABSTRACTS OF JAPAN, Band 10, Nr.
266 (P-496)[2322], 11. September 1986; & JP-
A-61 91 511 (MATSUSHITA ELECTRIC IND.
CO., LTD) 09-05-1986

(73) Patentinhaber : **Dr. Johannes Heidenhain
GmbH**
**Dr.-Johannes-Heidenhain-Strasse 5 Postfach
1260**
**W-8225 Traunreut (DE)**

(72) Erfinder : **Archer, Karl-Heinz**
**Molbertinger Strasse 4a**
**W-8227 Siegsdorf (DE)**

## Beschreibung

Die Erfindung betrifft eine gekapselte Positionsmeßeinrichtung gemäß dem Oberbegriff des Anspruches 1.

Eine derartige Positionsmeßeinrichtung wird insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Aus der DE-A-17 73 403 ist eine gekapselte Positionsmeßeinrichtung zum Messen der Relativlage zweier zueinander beweglicher Objekte bekannt, bei der im Inneren eines mit dem einen Objekt verbundenen Gehäuses ein Meßraum mit einer Maßverkörperung und mit einer die Maßverkörperung abtastenden Abtasteinheit vorgesehen ist, die mit dem anderen Objekt über einen Mitnehmer verbunden ist. Der Mitnehmer greift durch einen in Meßrichtung verlaufenden Schlitz im Gehäuse hindurch, der durch ein inneres Dichtelement und durch ein äußeres Dichtelement gegen äußere schädliche Einflüsse abgedichtet ist. Im Bereich des inneren Dichtelements und des äußeren Dichtelements in Form jeweils zweier dachförmig geneigter flexibler Dichtlippen ist der Mitnehmer doppelschwertförmig mit zwei Schneidkanten zum Aufspreizen der Dichtlippen der beiden Dichtlippenpaare ausgebildet. Durch die Aufspreizung der Dichtlippen an den Schneidkanten des Mitnehmers bilden sich unvermeidbare kleinere Leckstellen aus, durch die feste, flüssige und gasförmige Schadstoffe von außen in den Meßraum eindringen können, die zu Meßungenauigkeiten führen. Zur Vermeidung des Eindringens derartiger Schadstoffe in den Zwischenraum zwischen den beiden Dichtlippenpaaren wird der Zwischenraum mit Druckluft beaufschlagt.

Der Erfindung liegt die Aufgabe zugrunde, eine gekapselte Positionsmeßeinrichtung der genannten Gattung anzugeben, deren Meßraum noch hermetischer gegen schädliche Umwelteinflüsse abgedichtet ist.

Diese Aufgabe wird erfindungsgemäß durch die kennzeichnenden Merkmale des Anspruches 1 gelöst.

Die mit der Erfindung erzielten Vorteile bestehen insbesondere darin, daß bei einer Positionsmeßeinrichtung ein praktisch vollständiger Schutz des Meßraums vor schädlichen äußeren Einflüssen erzielt wird, so daß auch bei ungünstigen Umwelteinflüssen eine hohe Meßgenauigkeit und Meßsicherheit gewährleistet ist.

Vorteilhafte Ausbildungen der Erfindung entnimmt man den abhängigen Ansprüchen.

Ausführungsbeispiele der Erfindung werden anhand der Zeichnung näher erläutert.

Es zeigen

Figur 1 einen Querschnitt einer ersten gekapselten Längenmeßeinrichtung,

Figur 2 einen Querschnitt einer zweiten gekapselten Längenmeßeinrichtung und

Figur 3 einen Querschnitt einer dritten gekapselten Längenmeßeinrichtung.

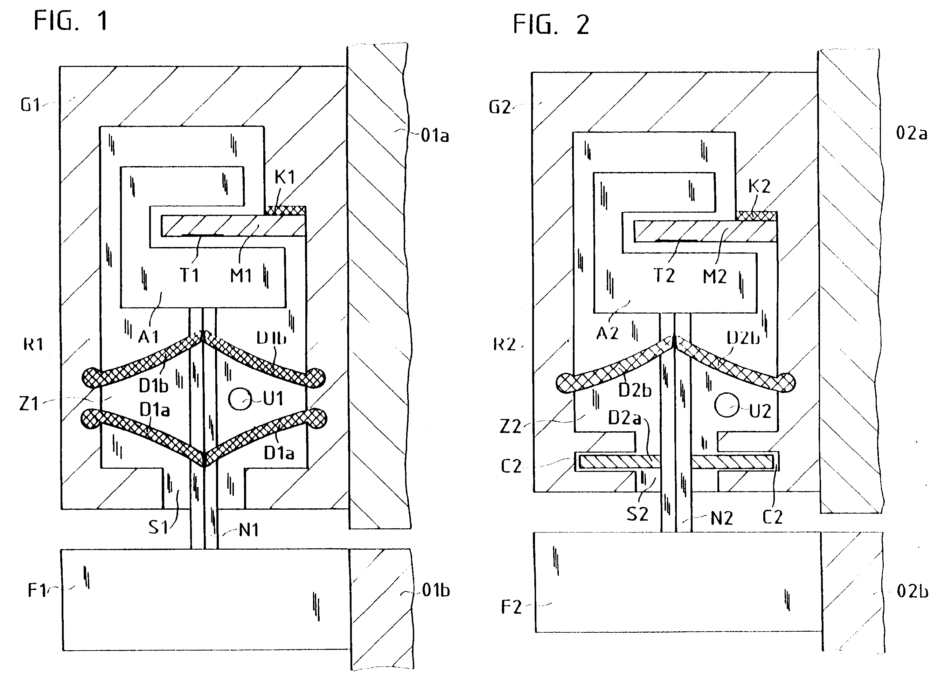

In Figur 1 ist ein schematischer Querschnitt einer ersten gekapselten Längenmeßeinrichtung zur Messung der Relativlage zweier zueinander beweglicher Objekte 01a, 01b dargestellt, die beispielsweise durch einen Schlitten und das Bett einer nicht gezeigten Bearbeitungsmaschine gebildet sein können.

Ein Gehäuse G1 dieser Längenmeßeinrichtung ist auf beliebige Weise an dem einen Objekt 01a befestigt und weist in seinem Inneren einen Meßraum R1 mit einer Maßverkörperung M1 auf, die mittels einer Klebeschicht K1 an einer Innenfläche des Gehäuses G1 befestigt ist und deren Teilung T1 von einer Abtasteinheit A1 zur Erzeugung von Meßwerten für die Relativlage der beiden Objekte 01a, 01b abgetastet wird.

Die Abtasteinheit A1 ist über einen doppelschwertförmigen Mitnehmer N1 mit einem Montagefuß F1 verbunden, der in nicht gezeigter Weise an dem anderen Objekt 01b befestigt ist. Das Gehäuse G1 weist einen in Meßrichtung verlaufenden Schlitz S1 auf, der durch ein äußeres Dichtelement D1a und ein inneres Dichtelement D1b abgedichtet ist, um ein Eindringen äußerer schädlicher Einflüsse in dem Meßraum R1 zu verhindern; die beiden Dichtelemente D1a, D1b sind jeweils durch zwei dachförmig geneigte flexible Dichtlippen gebildet, durch die der schwertförmige Mitnehmer N1 hindurchgreift. Obwohl die beiden Dichtlippenpaare D1a, D1b gut abdichtend an den beiden Seitenflächen des Mitnehmers N1 anliegen, lassen sich an den beiden Schneidkanten des schwertförmigen Mitnehmers N1 kleinere Leckstellen zwischen den Dichtlippen durch die Aufspreizung der Dichtlippenpaare D1a, D1b nicht vermeiden.

Zur Vermeidung des Eindringens fester, flüssiger und gasförmiger Schadstoffe in den Meßraum R1 des Gehäuses G1, die Meßgenauigkeiten zur Folge haben können, wird der Zwischenraum Z1 zwischen den beiden Dichtelementen D1a, D1b von einer nicht dargestellten Unterdruckquelle mit Unterdruck über eine Öffnung U1 beaufschlagt, die beispielsweise an einer oder an beiden Stirnseiten des Gehäuses G1 vorgesehen ist. Durch diesen Unterdruck im Zwischenraum Z1 liegen die Dichtlippen der beiden Dichtelemente D1a, D1b noch besser an den beiden Seitenflächen des Mitnehmers N1 und im Bereich außerhalb des Mitnehmers N1 aneinander an, wodurch sich auch die Leckstellen an den Schneidkanten des Mitnehmers N1 verringern. Dennoch in den Zwischenraum Z1 eindringende Schadstoffe werden von der Unterdruckquelle sofort abgesaugt und können wegen des Druckgefälles nicht in den Meßraum R1 eindringen.

An die Unterdruckquelle sind deutlich geringere Anforderungen als an die eingangs erwähnte Quelle für saubere und ölfreie Druckluft zu stellen.

In nicht dargestellter Weise kann bei einer horizontal an einer Bearbeitungsmaschine montierten Längenmeßeinrichtung wenigstens das äußere Dichtelement D1a gegen die Horizontalebene geneigt sein, so daß ein Fließgefälle für eingedrungene Flüssigkeiten zur Öffnung U1 hin besteht, die mit der Unterdruckquelle verbunden ist.

In Figur 2 ist ein schematischer Querschnitt einer zweiten gekapselten Längenmeßeinrichtung mit im wesentlichen den gleichen Elementen dargestellt, die dementsprechend auch die gleichen Bezugszeichen aufweisen, bei denen jedoch die Ziffer 1 durch die Ziffer 2 ersetzt ist.

Das äußere Dichtelement D2a besteht aus einem umlaufenden Metallband, das am Mitnehmer N2 befestigt ist und mit diesem bei der Meßbewegung verschoben wird. Dieses Metallband D2a verläuft in zwei Nuten C2 im Schlitz S2 des Gehäuses G2 und wird an den Enden des Gehäuses G2 mittels Umlenkrollen umgegelenkt und bildet so ein Endlosband.

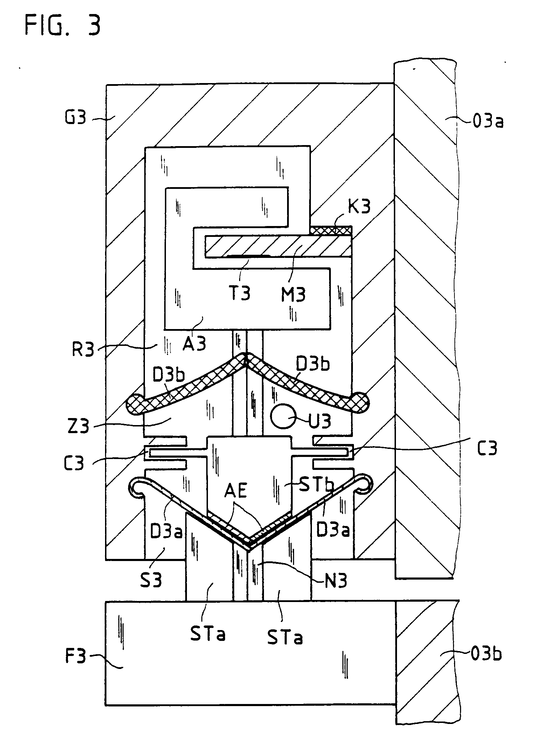

In Figur 3 ist ein schematischer Querschnitt einer dritten gekapselten Längenmeßeinrichtung mit im wesentlichen den gleichen Elementen dargestellt, die dementsprechend auch die gleichen Bezugszeichen aufweisen, bei denen jedoch die Ziffer 1 durch die Ziffer 3 ersetzt ist.

Das äußere Dichtelement D3a besteht aus zwei dachförmig geneigten Metallbändern, die durch ein inneres Stützelement STb und zwei äußere Stützelemente STa am Mitnehmer N3 abgestützt sind. Das innere Stützelement STb im Zwischenraum Z3 kann zwei Abstreifelemente AE zum Abstreifen eingedrungener Flüssigkeiten auf den Innenflächen der beiden Metallbänder D3a aufweisen. Das innere Stützelement STb kann in zwei Nuten C3 im Schlitz S3 des Gehäuses G3 geführt sein.

In nicht gezeigter Weise weisen die Schneidkanten des doppelschwertförmigen Mitnehmers N Schrägungen gegenüber der Meßrichtung im Bereich der Dichtelemente Da, Db auf; die Schrägungen im Bereich des inneren Dichtelements Db und die Schrägungen im Bereich des äußeren Dichtelements Da können unterschiedlich sein.

In nicht dargestellter Weise kann in einer Weiterbildung der Erfindung der Meßraum R auch über eine Öffnung mit dem Umgebungsdruck in Verbindung stehen; des weiteren kann der Meßraum aber auch über diese Öffnung mit Überdruck beaufschlagt werden.

Die Erfindung kann auch bei einer Winkelmeßeinrichtung mit einem kreisringförmigen Gehäuse eingesetzt werden.

## Patentansprüche

1. Gekapselte Positionsmeßeinrichtung zum Messen der Relativlage zweier zueinander beweglicher Objekte (01a, 02a, 03a, 01b, 02b, 03b), bei der im Inneren eines mit dem einen Objekt (01a, 02a, 03a) verbundenen Gehäuses (G1, G2, G3) ein Meßraum (R1, R2, R3) mit einer Maßverkörperung (111, 112, 113) und mit einer die Maßverkörperung abtastenden Abtasteinheit (A1, A2, A3) vorgesehen ist, die mit dem anderen Objekt (01b, 02b, 03b) über einen Mitnehmer (N1, N2, N3) verbunden ist, der durch einen in Meßrichtung verlaufenden Schlitz (S1, S2, S3) des Gehäuses (G1, G2, G3) hindurchgreift, bei der wenigstens ein inneres Dichtelement (Db) und wenigstens ein äußeres Dichtelement (Da) zur Abdichtung des Schlitzes (S1, S2, S3) wenigstens einen Zwischenraum (Z1, Z2, Z3) bilden und bei der ein Druckunterschied zwischen dem Meßraum (R1, R2, R3) und dem wenigstens einen Zwischenraum (Z1, Z2, Z3) besteht, dadurch gekennzeichnet, daß der durch das äußere und innere Dichtelement (Da, Db) gebildete Zwischenraum (Z) mit Unterdruck beaufschlagt ist.

2. Meßeinrichtung nach Anspruch 1, dadurch gekennzeichnet, daß das äußere und innere Dichtelement (D1a, Db) jeweils durch ein dachförmig geneigtes flexibles Dichtlippenpaar gebildet ist.

3. Meßeinrichtung nach Anspruch 1, dadurch gekennzeichnet, daß das äußere Dichtelement (D2a) durch ein umlaufendes Metallband und das innere Dichtlippenpaar (Db) durch ein dachförmig geneigtes, flexibles Dichtlippenpaar gebildet sind.

4. Meßeinrichtung nach Anspruch 1, dadurch gekennzeichnet, daß das äußere Dichtelement (D3a) durch zwei dachförmig geneigte Metallbänder gebildet ist, die durch äußere und innere Stützelemente (Sta, Stb) am Mitnehmer (N3) abgestützt sind, und daß das innere Dichtelement (Db) ein dachförmig geneigtes flexibles Dichtlippenpaar ist.

5. Meßeinrichtung nach Anspruch 4, dadurch gekennzeichnet, daß die inneren Stützelemente (Stb) Abstreifelemente (AE) aufweisen.

6. Meßeinrichtung nach Anspruch 1, dadurch gekennzeichnet, daß wenigstens das äußere Dichtelement (DA) in seiner Längserstreckung gegen die Meßrichtung geneigt ist.

7. Meßeinrichtung nach Anspruch 1, dadurch gekennzeichnet, daß die Schneidkanten eines doppelschwertförmigen Mitnehmers (N) im Bereich der Dichtelemente (Da, Db) wenigstens eine Schrägung gegenüber der Meßrichtung aufweisen.

9. Meßeinrichtung nach Anspruch 7, dadurch gekennzeichnet, daß die Schrägungen der Schneidkanten des Mitnehmers (N) im Bereich des inneren Dichtelements (Db) und im Bereich des äußeren Dichtelements (Da) unterschiedlich sind.

9. Meßeinrichtung nach Anspruch 1, dadurch gekennzeichnet, daß der Meßraum (R) mit dem Umgebungsdruck in Verbindung steht.

10. Meßeinrichtung nach Anspruch 1, dadurch gekennzeichnet, daß der Meßraum (R) mit Überdruck beaufschlagt ist.

## Claims

1. Encapsulated position measuring device for measuring the relative position of two relatively moveable objects (01a, 02a, 03a, 01b, 02b, 03b), in which inside a housing (G1, G2, G3) connected to one of the objects (01a, 02a, 03a) there is provided a measuring chamber (R1, R2, R3) with a material measure (M1, M2, M3) and a scanning unit (A1, A2, A3) for scanning the material measure, the scanning unit being connected to the other object (01b, 02b, 03b) via a driver (N1, N2, N3) which passes through a slot (S1, S2, S3), extending in the measuring direction, of the housing (G1, G2, G3), in which at least an inner sealing element (Db) and at least an outer sealing element (Da) form at least one intermediate chamber (Z1, Z2, Z3) for sealing the slot (S1, S2, S3), and in which there is a pressure difference between the measuring chamber (R1, R2, R3) and at least the one intermediate chamber (Z1, Z2, Z3), characterised in that the intermediate chamber (Z) formed between the outer and the inner sealing element (Da, Db) is subjected to underpressure.

2. Measuring device according to claim 1, characterised in that the outer and inner sealing element (D1a, Db) is each formed of a roof-shaped, inclined, flexible pair of sealing lips.

3. Measuring device according o claim 1, characterised in that the outer sealing element (D2a) is formed of a rotating metal band and that the inner pair of sealing lips (Db) is formed of a roof-shaped, inclined, flexible pair of sealing lips.

4. Measuring device according to claim 1, characterised in that the outer sealing element (D3a) is formed of two roof-shaped, inclined metal bands which are supported on the driver (N3) by outer and inner support elements (STa, STb), and that the inner pair of sealing lips (Db) is a roof-shaped, inclined, flexible pair of sealing lips.

5. Measuring device according to claim 4, characterised in that the inner support elements (STb) have wiper elements (Ae).

6. Measuring device according to claim 1, characterised in that at least the outer sealing element (DA) is inclined in its longitudinal direction towards the measuring direction.

7. Measuring device according to claim 1, characterised in that the cutting edges of a double-bladed sword-like driver (N) in the area of the sealing element (Da, Db) has at least one incline opposite to the measuring direction.

8. Measuring device according to claim 7, characterised in that the inclines of the cutting edges of the driver (N) are different in the area of the inner sealing element (Db) to that in the area of the outer sealing element (Da).

9. Measuring device according to claim 1, characterised in that the measuring chamber (R) is connected to the surrounding pressure.

10. Measuring device according to claim 1, characterised in that the measuring chamber (R) is subjected to overpressure.

## Revendications

1. Dispositif de mesure de position étanche pour la mesure de la position relative de deux objets (01a, 02a, 03a, 01b, 02b, 03b) mobiles l'un par rapport à l'autre, dans lequel il est prévu à l'intérieur d'un boîtier (G1, G2, G3) lié à l'un des objets (01a, 02a, 03a) une chambre de mesure (R1, R2, R3) contenant une règle (M1, M2, M3) et une unité de lecture (A1, A2, A3) lisant la règle, liée à l'autre objet (01b, 02b, 03b) par l'intermédiaire d'un entraîneur (N1, N2, N3) qui pénètre par une fente (S1, S2, S3) du boîtier (G1, G2, G3) s'étendant dans la direction de mesure, dans lequel au moins un élément d'étanchéité (Db) intérieur et au moins un élément d'étanchéité (Da) extérieur fermant de manière étanche la fente (S1, S2, S3) forment au moins une chambre intermédiaire (Z1, Z2, Z3) et dans lequel il existe une différence de pression entre la chambre de mesure (R1, R2, R3) et la chambre intermédiaire (Z1, Z2, Z3), caractérisé en ce que la chambre intermédiaire (Z) formée par l'élément d'étanchéité extérieur et l'élément d'étanchéité intérieur (Da, Db) est soumise à une pression négative.

2. Dispositif de mesure selon la revendication 1, caractérisé en ce que l'élément d'étanchéité extérieur et l'élément d'étanchéité intérieur (D1a, Db) sont formés respectivement par une paire de lèvres d'étanchéité souples inclinées en forme de toit.

3. Dispositif de mesure selon la revendication 1, caractérisé en ce que l'élément d'étanchéité extérieur (D2a) est formé par un ruban métallique rotatif et la paire de lèvres d'étanchéité intérieure (Db) est formée par une paire de lèvres d'étanchéité souples inclinées en forme de toit.

4. Dispositif de mesure selon la revendication 1, caractérisé en ce que l'élément d'étanchéité extérieur (D3a) est formé par deux rubans métalliques inclinés en forme de toit, qui prennent appui sur des éléments d'appui extérieurs et intérieurs (Sta, Stb) situés sur l'entraîneur (N3) et en ce que l'élément d'étanchéité intérieur (Db) est une paire de lèvres d'étanchéité souples inclinées en forme de toit.

5. Dispositif de mesure selon la revendication 4, caracérisé en ce que les éléments d'appui intérieurs (Stb) ont des éléments de frottement (AE).

6. Dispositif de mesure selon la revendication 1, caractérisé en ce qu'au moins l'élément d'étanchéité extérieur (DA) est incliné dans la direction axiale par rapport à la direction de mesure.

7. Dispositif de mesure selon la revendication 1, caractérisé en ce que les bords sécants d'un entraîneur (N) ensiforme double présentent, dans la région des éléments d'étanchéité (Da, Db), au moins une inclinaison par rapport à la direction de mesure.

8. Dispositif de mesure selon la revendication 7, caractérisé en ce que les inclinaisons des bords de l'entraîneur (N) sont différentes dans la région de l'élément d'étanchéité intérieur (Db) et dans la région de l'élément d'étanchéité extérieur (Da).

9. Dispositif de mesure selon la revendication 1, caractérisé en ce que la chambre de mesure (R) est reliée à la pression ambiante.

10. Dispositif de mesure selon la revendication 1, caractérisé en ce que la chambre de mesure (R) est à une pression supérieure à la pression ambiante.

5

FIG. 1

FIG. 2

G1

O1a

K1

T1    M1

R1

A1    D1b

Z1    D1b
      D1a    U1

      D1a

S1    N1

F1    O1b

G2

O2a

K2

T2    M2

R2

A2    D2b

Z2    D2b    U2
      D2a

C2

S2    N2    C2

F2    O2b

EP 0 372 193 B1

FIG. 3